# EUROPEAN PATENT SPECIFICATION

(11) **EP 0 656 909 B1**
(45) Date of publication and mention of the grant of the patent: **31.07.1996**
(21) Application number: 93919135.9
(22) Date of filing: 21.08.1993
(51) Int. Cl.: C08F 2/38, C08F 2/22

(54) **NOVEL POLYTELOMERIZATION PROCESS AND POLYTELOMERIC PRODUCTS**
POLYTELOMERISATIONSVERFAHREN UND POLYTELOMERE PRODUKTE
NOUVEAU PROCEDE DE POLYTELOMERISATION ET PRODUITS POLYTELOMERES

(30) Priority: 26.08.1992 US 935615; 26.08.1992 US 935618; 26.08.1992 US 935619
(43) Date of publication of application: 14.06.1995
(73) Proprietor: BASF Aktiengesellschaft, 67063 Ludwigshafen (DE)
(72) Inventor: SPITZER, Jan, J., Charlotte, NC 28226 (US); MIDGLEY, Andrew, Charlotte, NC 28226 (US); TAKAMURA, Koichi, Charlotte, NC 28277 (US); LOK, Karl, P., Charlotte, NC 28227 (US); XANTHOPOULO, Val, G., Charlotte, NC 28211 (US); DITRICH, Uwe, D-67071 Ludwigshafen (DE)
(86) International application number: EP9302251
(87) International publication number: WO9404575

(56) References cited:
- US-A- 4 501 845

## Description

The present invention relates to a novel polytelomerization process and to the materials so produced. Such products shall be referred to as polytelomers. Some of these polytelomers have been found to have adhesive properties.

It is known that free radical polymerization of monomers, e.g. styrene, esters of acrylic or methacrylic acid, butadiene, and their mixtures, give polymers that have been widely used as plastics, rubbers, adhesives, etc. as is described in textbooks of polymer science, e.g. L. Mandelkern: An Introduction to Macromoleculs, Springer Verlag, New York, 1972, chap. 1. The molecular weight of such polymers is controlled by small amounts of chain transfer agents (typically less than 3%), as is commonly known and described, e.g. in the book by. G. Odian: "Principles of Polymerization", John Wiley & Sons, New York, 1970, chaps. 3.5 and 3.6. The process known as telomerization is also mentioned in this book on p. 226-227. In this process the products so obtained have a very low molecular weight which is achieved by using a large amount of a chain transfer agent (typically 3-50%) of the total composition. The present invention is concerned with sequentially combined processes of polymerization and telomerization, which shall be referred to as polytelomerization. The products of this process shall be referred to as polytelomers. The kind and amount of monomers and chain transfer agents to be used in the first polymerization process shall be referred to as the polymeric stage, and the kind and amount of monomers and chain transfer agents to be used in the second telomerization process shall be referred to as the telomeric stage. The polymeric and telomeric stages generally (but not necessarily) differ in the monomeric compositions. E.g. useful polytelomers for adhesives formulations are obtained when monomeric compositions that yield polymers with glass transition temperatures below about 25°C are used in the polymeric stage, and monomeric compositions that yield telomers with glass transition temperatures above -10 °C in the telomeric stage.

In particular this invention relates to the polytelomerizations that are conducted in aqueous emulsions of substantially water insoluble monomers, incorporating emulsifiers and other additives as is commonly practiced in the art of emulsion polymerization, and which is described in the book by D.C. Blackley: Emulsion Polymerization, Applied Science Publishers, London, 1975. More particularly still, the present invention is concerned with the polytelomerization of butadiene and styrene, optionally also incorporating lesser amounts of acidic co-monomers such as itaconic, acrylic or methacrylic acids, or polar monomers such as acrylamide, N-methylolacrylamide and others. However, the invention of polytelomerization is applicable to other monomers and comonomers that are commonly used in emulsion polymerization.

In scientific and technical literature, and patents, there are no references to the sequentially combined process of polymerization and telomerization (polytelomerization), and to the materials so produced (polytelomers). The literature describes some variations (one, two or three polymeric stages) of emulsion polymerization and to the different uses of such products. According to usual practices in emulsion polymerization, a polymeric stage is a portion of all monomers that are to be polymerized, either by a batch or semicontinuous polymerization process. Some examples of such emulsions polymers for use in adhesive formulations are as follows. In US Patents 4,445,959 and No. 4,419,481 styrene- butadiene emulsion polymers are disclosed for use in adhesive formulations; these emulsion polymers are prepared by one or two stage emulsion polymerization processes without the telomeric stage. The first polymeric stage is usually a batch process (portion of monomers charged into a reactor before the initiation of the reaction), and the second stage is a continuous process (a portion of monomers is added into the first reacting polymeric stage over a period of time). An emulsion polymer prepared from styrene, butadiene and one additional monomer is disclosed in US Patent 4,438,232, also using one or two stage emulsion polymerization but without a telomeric stage. An emulsion polymer prepared by a two stage sequential polymerization but without a telomeric stage is disclosed in US Patent 4,803,240. A rather complex process of polymerization in three polymeric stages but without a telomeric stage is disclosed in US Patent No. 4,742,108.

There are few disclosures relating to the process of telomerization, or to the low molecular weight products so produced. US Patent No. 3,867,481 discloses low molecular weight polymers copolymerized form alkyl(meth)acrylates and styrene for use as a processing aid for polyvinyl halide resins. US Patent No. 4,912,169 discloses low molecular weight products prepared from alkyl and cycloalkyl acrylates and methacrylates, using large amounts of chain transfer agent, for use as additives in adhesive formulations.

US Patent 4,145,494 discloses a method of reducing the gelling of polydiene polymers, e.g. butadiene and of their copolymers with other non-diene monomers, by charging a chain transfer agent (sometimes with monomers) to the polymerizing mixture of monomers at about 75% conversion of the monomers to polymer. Such chain transfer additions constitute less than 5% of all reactants in the total amount of chain transfer agent is less than 2.5%.

From US-Patent 4 501 845 a two stage process for the polymerization of acrylic monomers is known, wherein the first stage is free of chain transfer agent or contains at least less chain transfer agents than the second stage.

The invention relates to a novel polytelomerization process and compositions produced by the process. The invention also relates to novel adhesive compositions.

Object of the invention is an aqueous polymer dispersion obtainable by free-radical aqueous emulsion polymerization of at least two batches A and B, with the proviso that:
- the free-radical aqueous emulsion polymerization of the two batches A and B takes place in one polymerization vessel,
- the polymerization of batch A commences at a different point in time to that of batch B,
- the composition of monomers and chain transfer agent of batch A contains 0-3% by weight of chain transfer agent and the composition of monomers and chain transfer agent of batch B contains more chain transfer agents than batch A, with the proviso that the amount of chain transfer agent in batch B is at least 5% by weight if the total amount of chain transfer agent in A and in B is less than 2.5% by weight of the total composition of monomers and chain transfer agents of batch A and B, or with the provisio that the monomers and chain transfer agent are at least partially continuously added to the polymerization vessel,
- batch A contains 85 - 50% by weight butadiene, 15 - 50% by weight styrene and 0 - 20% by weight carboxylic acids or non acidic polar monomers and
- the monomer composition of batches A and B are such that the glass transition temperature resulting from the application of the Fox equation to the monomer composition of batch A is at least about 5°C different from the glass transition temperature resulting from the application of the Fox equation to the monomer composition of batch B.

The chain transfer agents are such that their chain transfer constant is higher than 0.1 as defined in "Polymer Handbook", Third Edition, 1989 at pages 81-93.

Polytelomeric products produced by the process of this invention have been found to have outstanding adhesive properties. In addition, the polytelomeric products have been found useful in paper-coating compounds, polymer modification of asphalt, polymer modification of cement compositions, carpet-backing compounds, beater addition processes, heat sealable adhesives, construction adhesives and floor tile adhesives.

The instant polytelomerization process and the dispersions of the batch A (polymeric) and batch B (telomeric) stages are described below in detail. Also described are novel polytelomeric adhesive compositions produced by the instant process.

The given percentages by weight of the chain transfer agents in the claims and specification refer to the composition of monomers and chain transfer agents of batch A and B, respectively to the total composition of batch A and B.

The emulsion polytelomerization reaction is started in the usual fashion as a normal emulsion polymerization process, as practiced by those skillful in the art of emulsion polymerization.

Examples of auxiliary compounds (surfactants, colloidal stabilizers, salts, initiators, promoters and chelating agents) used commonly in emulsion polymerization are disclosed for example in US Patent No. 4,445,959. The composition of this first polymeric stage (batch A) is chosen to yield a polymer of high molecular weight and preferably of low glass transition temperature. The high molecular weight is achieved by employing small amounts of chain transfer agents.

The amount of batch A (polymeric stage) as a percentage of the total amount that is to be polytelomerized is from 5-95%, but preferably from 25-85%, and most typically from 40-75%. The composition of batch A contains butadiene from 85-50%, and styrene from 15-50%, and optionally incorporating carboxylic acids, or non-acidic polar monomers known to be used in emulsion polymerizations and their mixtures at levels of 0-20%, preferably at levels of 0-5% of this first polymeric composition. The chain transfer (preferably of the mercaptan type), level in this composition is from 0-3%, preferably from 0-1.5%. In addition to butadiene and styrene, other monomers and their mixtures with styrene and butadiene and their mixtures between themselves that are commonly used in emulsion polymerization can be employed. Monomers such as styrene, butadiene, esters of acrylic and methacrylic acids, vinyl acetate, vinyl chloride, chloroprene, tetrafluoroethylene, ethylene, isoprene, acrylonitrile, and also in mixture with appropriate cross-linking monomers such as divinyl benzene, and various difunctional esters of acrylic and methacrylic acid. Some combinations of monomers listed above may not be sufficiently reactive and such combinations will be easily recognized by those skilled in the art of emulsion polymerization.

The batch A composition can be reacted to varying degrees of conversion of the monomers to the polymer, from 25%-99%, preferably from 40%-90%, and typically from 55-80%. When the chosen degree of conversion of this first stage is attained the addition of its second continuous telomeric monomer composition is commenced.

This batch B (telomeric stage, higher chain transfer agent content compared to batch A) composition contains a large amount of chain transfer agent, to yield very low molecular weight polymers i.e. telomers of preferably but not necessarily high glass transition temperature. The total amount of batch B composition as a percentage of the total amount of monomers and chain transfer agents to be polytelomerized is from 95-5%, preferably 75-15%, and typically from 60-25%. Most importantly, this composition contains at least 5% of chain transfer agent, but most preferably 5-30% to ensure the synthesis of the low molecular weight telomeric fraction. Other monomers, such as those listed for batch A above, can also be used in batch B.

After the addition of the batch B monomers, the reaction is allowed to progress to substantially 100%, before stopping the reaction, neutralizing with an appropriate reagent and transferring to final stripping to remove residual monomers.

The properties of the polytelomeric products are determined by the skillful selection of the amounts and compositions of the first polymeric and the second telomeric additions and by the degree of conversion of the polymeric composition. These polytelomeric properties are also determined by the usual polymerization variables, such as the duration of the additions for polymeric and telomeric stages, temperature at different stages of the polytelomerization process, final conversion, a reaction rate, the effects of all these variables being known to those skillful in the art of emulsion polymerization.

There are other ways to arrange the reaction using the batch A and B compositions, e.g. the low molecular weight high glass transition batch B can be synthesized first and the high molecular weight low glass transition batch A may be reacted second, i.e. in the reverse order to that described above. In this case the process is to be referred to as telopolymerization. Or the reaction could be arranged in three or more sequential stages of different batch A and B compositions in order to gain extra freedom to manipulate the desired balance of polytelomeric properties.

Without wishing to be bound by theory, the inventors believe that the invention is based on a number of scientific principles that explain the novel and characteristic properties of polytelomers, and that show how these properties can be achieved.
a) The Mixing Effect. The mixing of the unreacted portion of the first polymeric stage with the second telomeric stage during the reaction has two consequences. First, this mixing effect yields a continuum of polymeric and telomeric chains with decreasing molecular weight; hence very broad molecular weight distributions are obtainable by this novel process, particularly if the polymeric stage contains monomers with a second reactive group, such as dienes. In monomeric compositions lacking a diene cross-linking monomer such as butadiene, an additional cross-linking monomer such as divinyl benzene may be employed to obtain the gel portion of the polymer. A broad molecular weight distribution suggests that improved balance of adhesive properties, such as tack and shear may be realized. Second, if the telomeric stage contains monomers that give a higher glass transition temperature than the monomers used in the polymeric stage, the continuum of polymeric and telomeric chains synthesized in the second telomeric stage will have both a decreasing molecular weight and an increasing glass transition temperature. A broad temperature range of glass transitions suggests that these products may have improved adhesive properties at high temperature.
b) Phase Separation. In polytelomeric products there is usually no sharp boundary between the polymer that is synthesized first and the low molecular weight telomers that are synthesized later in the reaction. However, if the low molecular weight fraction is not compatible with the polymeric fraction, various degrees of phase separation within the latex particle or in polytelomer films may occur. Such phase separation may lead to a different balance of polymer properties, as is known in the art of diblock and triblock copolymers, which is described for example in the book by N.R. Legge, G. Holden and H.E. Schroeder: "Thermoplastic Elastomers", Hanser Publishers, New York, 1987.
c) Grafting Effect. If polymer synthesized in the first polymeric stage has some reactive groups (e.g. the second double bond in diene monomers such as butadiene), the chains being synthesized in the second telomeric stage have a possibility to react with such polymer, i.e. become grafted, and hence permanently attached to the polymer. When the polymeric stage is reacted to a high conversion, or to substantially 100% conversion, the mixing effects described under a) will be minimized or substantially eliminated, but the polytelomerization process still allows the grafting of low molecular weight telomers onto the polymer chains synthesized in the polymeric stage. Such grafting may reduce the migration of low molecular weight tolomers, particularly when they are liquid, out of the polytelomeric materials.
d) Intimate Association. Even those chains that do not become grafted, do become intimately associated with the polymer in the same latex particle. Such intimate associations cannot be achieved by the usual blending of separately emulsified and dispersed resins with emulsion polymers, or by blending emulsion polymers of different molecular weights and different glass transition temperatures, unless very many of such emulsion polymers of extremely small particle sizes are blended. Such intimate blending suggests that polytelomers may be used as adhesives without the need to blend additional low molecular weight additives such as tackifying resins into them, as is commonly practiced in the art of adhesive formulations. These effects can be demonstrated by the change of molecular weight distributions as determined by gel permeation chromatography, and by the broadening of the range in which glass transition takes place as determined by dynamical mechanical analysis. For some compositions we have also obtained electron microscope pictures of polymer films that show discrete and regular midrodomains of the telomeric resins (high glass transition temperature and low molecular weight) in the continuous matrix of the soft polymer (low glass transition temperature and high molecular weight).

The following examples are included to illustrate to the invention:

### Example 1

### Comparison of polytelomerization to polymerization

For the purpose of providing the evidence for the scientific hypothesis mentioned earlier an emulsion polymerization process and an emulsion polytelomerization process were performed at the same overall composition of monomers and chain transfer agents. The compositions are shown in Table 1 together with the molecular weight distributions. It is seen that in the case of a polymer 24% of the total polymer has a molecular weight higher than 20,000 but in the case of the polytelomer the same fraction has a molecular weight higher than 110,000. The molecular weight distribution of the polytelomer is much broader than the molecular weight distribution of the polymer as shown by the polydispersity index. The data also show that the tensile strength of the polytelomer is about 3 kg/cm² at 2500% elongation, whereas the polymer has no measurable tensile strength.

This particular polytelomer has useful pressure sensitive adhesive properties, as shown in Table 2, whereas the low molecular weight polymer on its own has no useful adhesive properties.

### Table 1

### Comparison of polymerization and polytelomerization at the same overall composition

| Composition | Example 1 Polymerization | Example 2 Polytelomerization | |
|---|---|---|---|
| | | Polymeric stage | Telomeric stage |
| Styrene | 49.4 | 20.9 | 28.5 |
| Butadiene | 45.8 | 38.7 | 7.1 |
| Itaconic acid | 1.0 | 1.3 | 0.6 |
| 1-Dodecylmercaptan | 4.8 | 0.4 | 4.4 |
| Conversion of polymeric stage | | 64% | |
| Molecular weight distribution Mw | Polymer | Polytelomer | |
| 2.3% | >110,000 | >7,400,000 | |
| 10% | > 38,000 | > 440,000 | |
| 24% | > 20,000 | > 110,000 | |
| 49% | > 10,000 | > 15,000 | |
| 81% | > 4,500 | > 4,500 | |
| Insolubles (gel) (%) | nil | 3 | |
| Polydispersity | 2,4 | 92 | |
| Mw | 17,000 | 710,000 | |
| Tensile & Elongation (kg/cm²) | nil | 3.2 & 2500% | |

### Example 2 - 4

### Control of molecular weight distribution

Examples 2, 3 and 4 in Table 3 show how the molecular weight distribution is modified by varying the level of the chain transfer agent in the polymeric stage. Example 2 shows the level of chain transfer agent in the polymeric stage such that there is substantially no insoluble polymer (gel) formed, and the resulting polytelomer has an extremely broad molecular weight distribution, as shown by the very large polydispersity index. Example 3 shows that when the chain transfer level in the polymeric stage is reduced, there is an increase of the insoluble part of polymer to about 26%, and the weight average molecular weight of the soluble part is drastically reduced. Example 4 shows that when the chain transfer level in the polymeric stage is increased, there is no insoluble polymer formed but the polymer molecular weight is substantially reduced. These examples show that the polytelomerization process responds in the expected fashion to the common variations of the levels of chain transfer agent, and hence this process can be easily practiced by those skillful in the art of emulsion polymerization.

**Table 2**

| Pressure - sensitive properties of a polytelomer compared to polymer | | |
|---|---|---|
| | Example 1 (Polymer) | Example 2 (Polytelomer) |
| 180° Peel Strength (Mylar on Stainless Steel) N/2 cm (lb/in) | 2.1 (0.6) | 12.95 (3.7) |
| Looptack 30 sec Dwell (Mylar on Stainless Steel) N/2 cm (lb/in) | nil | 7.7 (2.2) |
| Shear (1" x ½" 1kg) (hrs) | nil | 4.0 |

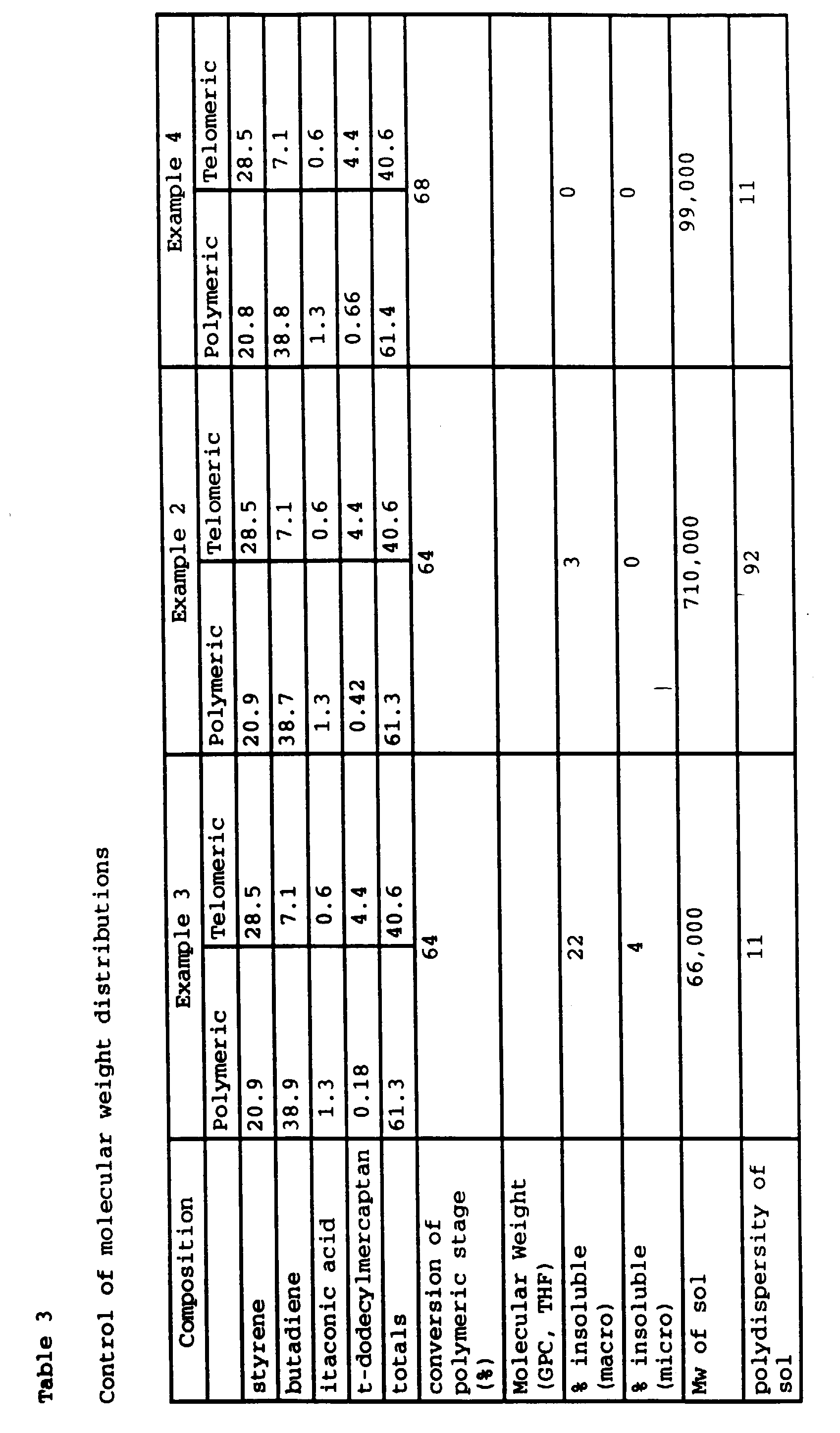

### Example 5

### A polytelomer with multiphase film morphology

It is possible to prepare latex polytelomers, the dried films of which exhibit multiphase morphology as determined by appropriate staining techniques and by taking electron microscope pictures of so stained films. In Table 4 the polymeric and telomeric compositions are shown, in which only styrene is used in the telomeric composition, and in which both telomeric and polymeric stages have increased amounts of acidic monomers (methacrylic acid).

This latex polytelomer in Example 5 was thickened with a thickener (Acrysol GS of Rohm and Haas), drawn down on a sheet of ABS plastic, and dried for 5 min at 80°C to give a polytelomer film thickness of about 50 micrometers. To this dried film a strip of polyester film (Mylar) was laminated with the aid of a 2.04 Kg (4.5 lb.) roller. The film was conditioned in an oven for four hours at 70°C, and then the peel strength was determined on an Instron tensile machine immediately without letting the sample cool down. The peel strength of this sample was about 12.26 N/cm (7 lb/in), whereas in the same experiment the polytelomer shown in Example 2 had peel strength of only 5.25 N/cm (3 lb/in), and the low molecular weight polymer of Example 1 had no peel strength at this elevated temperature. Thus these polytelomers show useful adhesive properties at elevated temperatures.

**Table 4**

| Composition for a multiphase polytelomer (Example 5) | | |
|---|---|---|
| | Polymeric Stage | Telomeric Stage |
| Styrene | 12 | 33 |
| Butadiene | 45 | - |
| Itaconic Acid | 1.3 | 0.6 |
| Methacrylic Acid | 3.0 | 3.0 |
| t-dodecylmercaptan | 0.4 | 4.4 |
| Conversion of Polymeric Stage (%) | | |

### Example 6

### Adhesive with improved room temperature peel strength

In some applications it is desirable to obtain a good balance of peel strength over a wide temperature range. The polytelomerization process and the polytelomeric products so obtained are suitable to obtain this application advantage, using the following compositions.

| Monomers and Chain Transfer Agent | Polymeric Composition % | Telomeric Fixed Composition % |
|---|---|---|
| Styrene | 20.9 | 37.4 |
| Butadiene | 38.7 | nil |
| t-Dodecylmercaptan | 0.42 | 2.6 |

After charging the initial water, surfactants and other ancialliary ingredients usually employed in the art of emulsion polymerization, including small amounts of polar monomers, heating this initial mixture to the polymerization temperature of 75°C, and injecting a solution of the usual catalyst, the polymeric composition was pumped into the reactor in 3 hours at constant pumping rate. After waiting another hour, the conversion of this first polymeric composition was 75%, when the second telomeric composition was pumped into the reactor in two hours. Then the temperature was raised to 85°C and the reaction was allowed to reach substantially complete conversion. The final product was a stable latex emulsion of particle size of 174 nm, 48% total solids and pH of 2.25. This emulsion was pH adjusted to 7.5 and the emulsion then stripped in the usual fashion known in the art of emulsion polymerization.

To this finished latex emulsion was added a small amount of a thickener Acrysol GS (Rohm and Haas Co.) to increase the viscosity to about 1500 cP, and this thickened latex was drawn down on a coupon 0.64 cm (1/4") thick 5.08 x 10.16 cm (2"x4") wide and long, and dried in oven for 5 min at 70°C. This yielded a pressure-sensitive film of a thickness of about 50 micrometers. Polyester film strips 2.54 cm (1") wide and 0.0038 cm (0.0015") thin were laminated to these adhesive layers with a 2.04 Kg (4.5 lb) roller. After conditioning these samples for 24 hours at room temperature, the 180° peel strength was determined with the aid of an instron tensile machine. Other samples were additionally conditioned for four hours at 70 and 100°C in an oven. These samples were taken out of the oven and tested for peel strength within 15 seconds, without letting them cool down, on the Instron tensile machine.

The results of this test are shown in the following Table, in which the test results for a conventional styrene-butadiene polymer (Butofan NS 222, BASF Corp.) are shown. It is seen that the polytelomer maintains the same high peel strength at 70°C as that at room temperature, whereas the peel strength of the conventional latex adhesive is low at higher temperatures.

### Table 5

Comparison of polytelomeric adhesives with conventional polymeric adhesives for polyester film/ABS laminate.

| | Peel Strength N/2 cm (lb/in) | | |
|---|---|---|---|
| Temperature | @R.T. | @70°C | @100°C |
| Usual Pressure Sensitive Adhesive (Butofan NS 222) | 21 (6.0) | 8.75 (2.5) | 2.45 (0.7) |
| Example 6 | 23.8 (6.8) | 20.3 (5.8) | 8.75 (2.5) |

## Claims

1. An aqueous polymer dispersion obtainable by free-radical aqueous emulsion polymerization of at least two batches A and B, with the proviso that:
- the free-radical aqueous emulsion polymerization of the two batches A and B takes place in one polymerization vessel,
- the polymerization of batch A commences at a different point in time to that of batch B,
- the composition of monomers and chain transfer agent of batch A contains 0-3% by weight of chain transfer agent and the composition of monomers and chain transfer agent of batch B contains more chain transfer agents than batch A, with the proviso that the amount of chain transfer agent in batch B is at least 5% by weight if the total amount of chain transfer agent in A and in B is less than 2.5% by weight of the total composition of monomers and chain transfer agents of batch A and B, or with the provisio that the monomers and chain transfer agent are at least partially continuously added to the polymerization vessel,
- batch A contains 85 - 50% by weight butadiene, 15 - 50% by weight styrene and 0 - 20% by weight carboxylic acids or non acidic polar monomers and
- the monomer composition of batches A and B are such that the glass transition temperature resulting from the application of the Fox equation to the monomer composition of batch A is at least about 5°C different from the glass transition temperature resulting from the application of the Fox equation to the monomer composition of batch B.

2. The aqueous polymer dispersion of claim 1 wherein the total amount of chain transfer agent is greater than 2.5% by weight of the total composition of monomers and chain transfer agents of batch A and B.

3. The aqueous polymer dispersion of claim 1 wherein the amount of chain transfer agent in batch B is at least 5 to 30% of the composition of monomers and chain transfer agent of batch B.

4. The aqueous polymer dispersion of claim 1 wherein the monomers and chain transfer agent of batch A and B are at least partially continuously added to the polymerization vessel.

5. The aqueous dispersion of claim 1 wherein the monomers and chain transfer agent are continuously added to the polymerization vessel.

6. The aqueous dispersion of claim 1 wherein the batch A polymerization is started first.

7. The aqueous polymer dispersion of claim 1 wherein the batch B polymerization is started first.

8. Use of aqueous dispersions according to one of claims 1 to 7 as an adhesive.

9. Use of an adhesive according to claim 8, whereby the monomers composition of batch B has the higher glass transition temperature.

10. Use of an adhesive according to claim 8, whereby the glass transition temperature of the monomer composition of batch B is at least 30°C.

## Patentansprüche

1. Wäßrige Polymerisatdispersion, erhältlich durch radikalische wäßrige Emulsionspolymerisation von mindestens zwei Chargen A und B, mit der Maßgabe, daß
- die radikalische wäßrige Emulsionspolymerisation der beiden Chargen A und B in einem Polymerisationegefäß erfolgt,
- die Polymerisation der Charge A zu einem anderen Zeitpunkt als die Polymerisation der Charge B begonnen wird,
- die Zusammensetzung der Charge A aus Monomeren und Kettenübertragungemittel 0-3 Gew.-% Kettenübertragungsmittel enthält und die Zusammensetzung der Charge B aus Monomeren und Kettenübertragungemittel mehr Kettenübertragungemittel als Charge A enthält, mit der Maßgabe, daß die Menge an Kettenübertragungemittel in Charge B mindestens 5 Gew.-% beträgt, wenn die Gesamtmenge an Kettenübertragungsmittel in A und B weniger als 2,5 Gew.-% der Gesamtzusammensetzung der Chargen A und B aus Monomeren und Kettenübertragungsmitteln beträgt, oder mit der Maßgabe, daß die Monomere und Kettenübertragungsmittel dem Polymerisationsgefäß zumindest teilweise kontinuierlich zugesetzt werden,
- die Charge A 85 - 50 Gew.-% Butadien, 15 - 50 Gew.-% Styrol und 0 - 20 Gew.-% Carbonsäuremonomere oder nichtacide polare Monomere enthält und
- die Monomerzusammensetzung der Chargen A und B so gewählt ist, daß sich die durch Anwendung der Fox-Gleichung auf die Monomerzusammensetzung der Charge A erhaltene Glasübergangstemperatur um mindestens 5°C von der durch Anwendung der Fox-Gleichung auf die Monomerzusammensetzung der Charge B erhaltenen Glaeübergangetemperatur unterscheidet.

2. Wäßrige Polymerisatdispersion nach Anspruch 1, dadurch gekennzeichnet, daß die Gesamtmenge an Kettenübertragungsmittel mehr als 2,5 Gew.-%, bezogen auf die Gesamtzusammensetzung der Chargen A und B aus Monomeren und Kettenübertragungsmitteln, beträgt.

3. Wäßrige Polymerisatdispersion nach Anspruch 1, dadurch gekennzeichnet, daß die Menge an Kettenübertragungsmittel in Charge B mindestens 5 bis 30%, bezogen auf die zusammensezung der Charge B aus Monomeren und Kettenübertragungsmittel, beträgt.

4. Wäßrige Polymerisatdispersion nach Anspruch 1, dadurch gekennzeichnet, daß die Monomere und Kettenübertragungsmittel der Chargen A und B dem Polymerisationsgefäß zumindest teilweise kontinuierlich zugesetzt werden.

5. Wäßrige Dispersion nach Anspruch 1, dadurch gekennzeichnet, daß die Monomere und Kettenübertragungsmittel dem Polymerisationsgefäß kontinuierlich zugesetzt werden.

6. Wäßrige Dispersion nach Anspruch 1, dadurch gekennzeichnet, daß die Polymerisation der Charge A zuerst gestartet wird.

7. Wäßrige Polymerisatdispersion nach Anspruch 1, dadurch gekennzeichnet, daß die Polymerisation der Charge B zuerst gestartet wird.

8. Verwendung der wäßrigen Dispersionen gemäß einem der Ansprüche 1 bis 7 als Klebstoff.

9. Verwendung eines Klebstoffs gemäß Anspruch 8, wobei die Monomerzusammensetzung der Charge B die höhere Glasübergangstemperatur aufweist.

10. Verwendung eines Klebstoffs gemäß Anspruch 8, wobei die Glasübergangstemperatur der Monomerzusammensetzung der Charge B mindestens 30°C beträgt.

## Revendications

1. Dispersion aqueuse de polymère, que l'on peut obtenir par la polymérisation en émulsion aqueuse à radicaux libres d'au moins deux lots A et B, avec la condition que :
- la polymérisation en émulsion aqueuse à radicaux libres des deux lots A et B ait lieu dans un récipient de polymérisation,
- la polymérisation du lot A commence à un moment différent de celle du lot B,
- la composition des monomères et de l'agent de transfert de chaînes du lot A contient de 0 à 3% en poids d'agent de transfert de chaînes et la composition de monomères et d'agent de transfert de chaînes du lot B contient plus d'agents de transfert de chaînes que le lot A, avec la condition que la quantité d'agent de transfert de chaînes dans le lot B soit d'au moins 5% en poids si la quantité totale d'agent de transfert de chaînes dans A et dans B est inférieure à 2,5% en poids de la composition totale des monomères et des agents de transfert de chaînes des lots A et B, ou avec la condition que les monomères et les agents de transfert de chaînes soient au moins partiellement continuellement introduits dans le récipient de polymérisation,
- le lot A contienne 85 à 50% en poids de butadiène, 15 à 50% en poids de styrène et 0 à 20% en poids d'acides carboxyliques ou de monomères polaires non acides, et
- la composition des monomères des lots A et B soit telle que la température de transition vitreuse qui résulte de l'application de l'équation de Fox à la composition des monomères du lot A diffère d'au moins environ 5°C de la température de transition vitreuse résultant de l'application de l'équation de Fox à la composition des monomères du lot B.

2. Dispersion aqueuse de polymère suivant la revendication 1, caractérisée en ce que la quantité totale d'agent de transfert de chaînes est supérieure à 2,5% en poids de la composition totale des monomères et des agents de transfert de chaînes des lots A et B.

3. Dispersion aqueuse de polymère suivant la revendication 1, caractérisée en ce que la quantité d'agent de transfert de chaînes du lot B représente au moins 5 à 30% de la composition des monomères et de l'agent de transfert de chaînes du lot B.

4. Dispersion aqueuse de polymère suivant la revendication 1, caractérisée en ce que les monomères et l'agent de transfert de chaînes des lots A et B sont au moins partiellement continuellement introduits dans le récipient de polymérisation.

5. Dispersion aqueuse de polymère suivant la revendication 1, caractérisée en ce que les monomères et l'agent de transfert de chaînes sont continuellement introduits dans le récipient de polymérisation.

6. Dispersion aqueuse de polymère suivant la revendication 1, caractérisée en ce qu'on amorce en premier lieu la polymérisation du lot A.

7. Dispersion aqueuse de polymère suivant la revendication 1, caractérisée en ce qu'on amorce en premier lieu la polymérisation du lot B.

8. Utilisation de dispersions aqueuses suivant l'une quelconque des revendications 1 à 7 à titre d'adhésifs.

9. Utilisation d'un adhésif suivant la revendication 8, caractérisée en ce que la composition des monomères du lot B possède la température de transition vitreuse la plus élevée.

10. Utilisation d'un adhésif suivant la revendication 8, caractérisée en ce que la température de transition vitreuse de la composition des monomères du lot B est d'au moins 30°C.
